# EUROPEAN PATENT SPECIFICATION

(11) **EP 1 869 332 B1**
(45) Date of publication and mention of the grant of the patent: **20.01.2010**
(21) Application number: 06749088.8
(22) Date of filing: 03.04.2006
(51) Int. Cl.: F16C 11/06, F16B 21/07, F16B 9/02

(54) **BALL HOLDING, LATCHING AND LOCKING APPLICATIONS USING RADIAL AND AXIAL SPRINGS**
HALTE-, BLOCKIER-, UND VERRIEGELUNGSANWENDUNGEN FÜR EINE KUGEL MITTELS RADIALER UND AXIALER FEDERN
DISPOSITIF DE RETENUE ET DE VERROUILLAGE D'UNE BILLE, ET APPLICATIONS POUR SYSTEMES DE VERROUILLAGE AU MOYEN DE RESSORT RADIAUX ET AXIAUX

(30) Priority: 05.04.2005 US 668309 P; 31.03.2006 US 278372
(43) Date of publication of application: 26.12.2007
(73) Proprietor: BAL SEAL ENGINEERING CO., INC., Lake Forest, CA 92610-2610 (US)
(72) Inventor: BALSELLS, Peter, J., Newport Beach, California 92657 (US)
(74) Representative: Kohler Schmid Möbus
(86) International application number: PCT/US2006/012109
(87) International publication number: WO 2006/107789

(56) References cited:
- WO-A-02/070891
- CH-A- 239 076
- DE-C- 762 762
- US-A- 3 272 541
- US-A- 4 666 330
- US-A- 5 545 842
- US-B1- 6 227 751

## Description

The present invention generally relates to latching components and is more particularly related to latching of a spherical component to enable both rotation and conical motion.

Canted coil springs have been used extensively and latching applications primarily in connectors that require longitudinal and rotating movement, The present application furthers the use of canted coil springs by their utilization in a latching mechanism having a ball and socket arrangement.

Connectors used in holding applications have been described extensively, as for example, US patent 4974821, 5139276, 5082390, 5,545,842, 5,411,348 to Balsells, and others.

Of these cited U.S. Patents, 4,974,821 generally describes canted coil springs and a groove for orienting the spring for major axis radial loading for enabling a specific preselected characteristic in response to loading of the spring.

U.S. 5,082,390 teaches a canted coil spring for holding and locking a first and second number to one another.

U.S. 5,139,276 discloses a radially loaded spring in a groove for controlling resilient characteristics of the spring.

U.S. 5,411,348 and 5,545,842 teach spring mechanisms which preferentially lock two members together.

DE 762 762 C discloses a latching mechanism comprising a housing with a cavity and an opening. A ball can be inserted into the housing cavity through said opening. The housing comprises a groove in which a coil spring is disposed, thereby enabling ball rotation within said cavity.

Object of the present invention is to suggest a latching mechanism which enables the ball to be positioned at different lateral positions.

This object is solved by a latching mechanism according to claim 1.

### SUMMARY OF THE INVENTION

A latching mechanism in accordance with the present invention generally includes a housing having a cavity therein with an opening thereto. A ball, sized for insertion into a housing cavity through the opening, includes a stem having a smaller diameter than the ball from which it extends.

At least one groove in the housing cavity is provided proximate the cavity opening and a coil spring is disposed in the groove which retains the ball for rotation from the cavity with the stern at selected conical angles with respect to a housing centerline.

A plurality of spaced apart circumferential grooves is utilized in the housing cavity with a continuous garter coil spring disposed in each of the grooves which enables positioning the ball at different lateral positions within the housing.

In one embodiment, the groove and the spring are configured for locking the ball within the housing cavity and still another embodiment of the present invention the cavity is spherical. In this embodiment, two grooves may be disposed in the housing cavity with coil springs therein with the grooves being disposed an opposite hemispheres of the ball.

### BRIEF DESCRIPTION OF THE DRAWINGS

The advantages and features of the present invention will be better understood with the following description when considered in conjunction with the accompanying drawings, of which:
Figure 1 is a side view of a latching mechanism in partial cross section, generally showing a housing and a cavity therein with an opening thereto along the ball inserted therein having a stem extending therefrom along with a groove in the housing cavity proximate the cavity opening the coil spring disposed in the groove for retaining the ball for rotation and conical movement within the cavity;
Figure 2 is a view similar to Figure 1 of a latching mechanism utilizing a different groove configuration and also illustrating the decoupling of the ball from the,housing cavity;
Figure 3 is a cross sectional view illustrating one embodiment in which arcuate grooves and arcuate coil spring segments are utilized;
Figure 4 is a cross sectional view of an embodiment of the present invention illustrating the use of a continuous circumferential groove and continuous garter type coil spring;
Figure 5 illustrates an embodiment of the present invention utilizing a plurality of springs and grooves;
Figure 5A illustrates a specific groove and a coil spring configuration for enabling of movement in a lateral direction within the housing cavity;
Figure 6 illustrates the ball being positioned between the two of the grooves and springs;
Figure 7 illustrates yet another position of the ball within the cavity;
Figure 7A illustrates a groove and spring configuration for locking the ball within the cavity to prevent removal therefrom; and
Figure 8 is a cross sectional view of yet another embodiment of the present invention utilizing two grooves and coil springs along with a cavity having a spherical shaped portion.

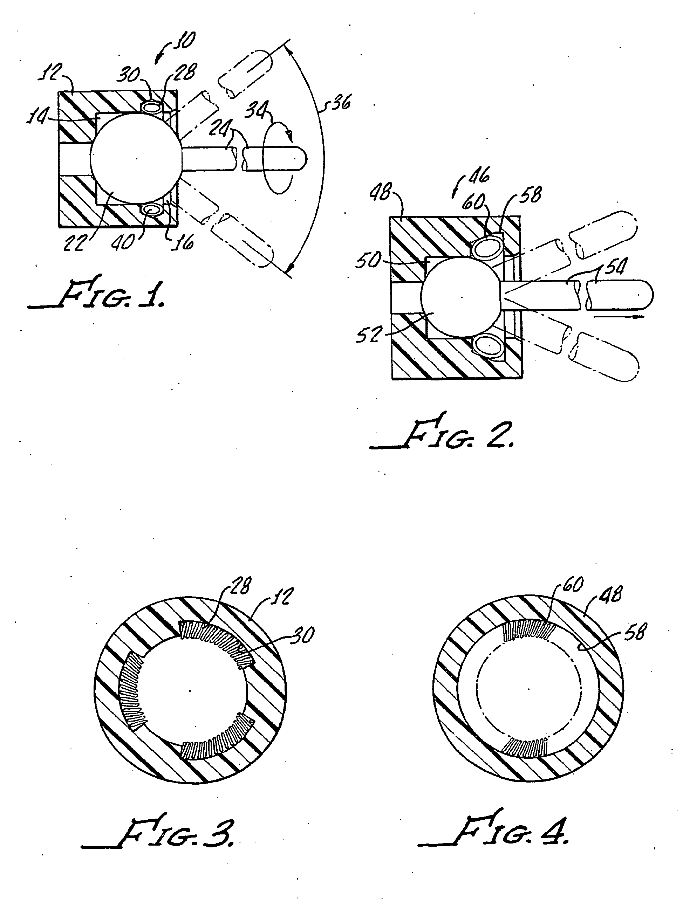

Figures 1 to 4 do not show embodiments according to the invention as defined in claim 1.

### DETAILED DESCRIPTION

With reference to Figure 1, there is shown a latching mechanism 10 generally including a housing 12 having a cavity 14 therein with an opening 16. A ball 22 having a stem 24 extending therefrom is disposed within the cavity 14 with the ball 22 being sized for insertion into the housing cavity 14 through the opening 16 as illustrated. A radial canted coil spring 28 is disposed in a v-groove 30 for retaining the ball 22 for rotation within the cavity 14 with the stem at selected conical angles illustrated by the arrows 34, 36 in Figure 1. Suitable springs and grooves for providing specific pre-selected characteristics are described in the hereinabove referenced U.S. Patents.

Briefly, the spring 28 is retained in the cavity 30 and a radial force is applied along a minor axis 40 onto the coil spring 28. The spring 28 is initially retained in the cavity by a spring OD larger than the ID of the cavity 14 thus creating a force that retains the spring within the cavity 14. The groove width (GW) is larger than the coil width (GW) of the spring (GW>CW). This type of design generates a ratio of connect to disconnect at approximately 1 to 1. Other configurations considered part of the present invention are described in the hereinabove referenced U.S. Patents.

The force required to insert and disconnect the ball 22 from the housing 12 is affected by the contact angle with the greater the contact angle the lower the force required to connect or disconnect. Such contact angle is determined by the groove configuration.

With records to Figure 2, alternative embodiment 46 includes a housing 48 with cavity 50 with a ball 52 inserted thereinto with an extending stem 54 utilizing a different groove 58 configuration which includes a tapered bottom. The groove width at the bottom is smaller than the groove coil width illustrating another method in which the spring 60 can be retained in the groove 58 and cavity 50 with the forces to insert and disconnect being variable requiring more force to connect and to disconnect and due to the geometry of the groove and spring assembly. Again, further detach of spring are groove configuration may be found in the referenced U.S. patents.

As illustrated in Figures 3 and 4, a coil spring 28 may comprise an arc segment and correspondingly the groove 30 is also an arc segment whereas, as shown in Figure 4, the coil spring 60 may be continuous with the groove 58 also being circumferential and continuous within the cavity 50 according to the invention.

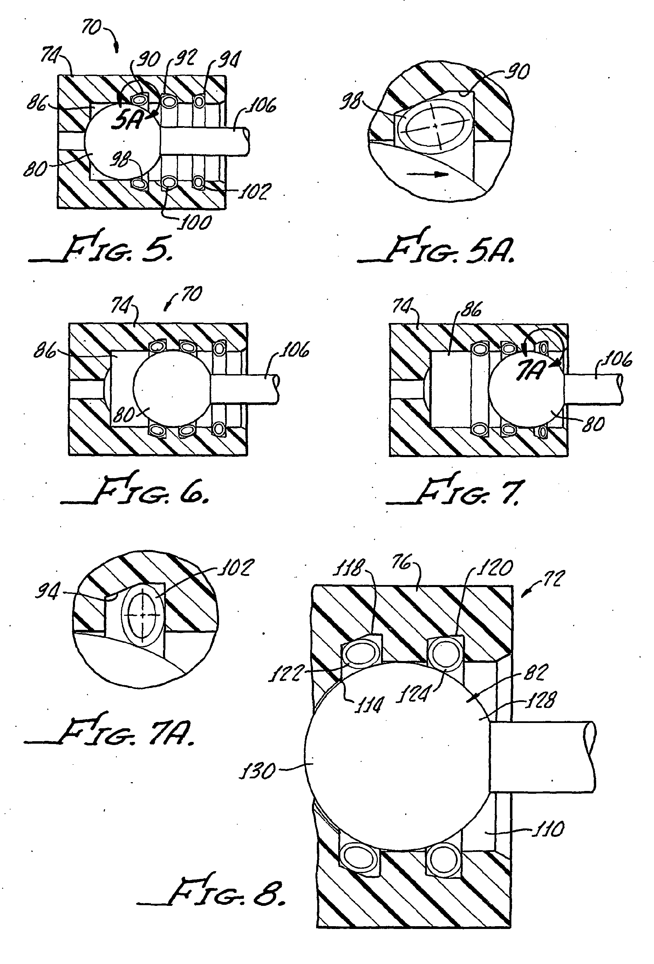

The materials of construction for the embodiment 10, 46, as well as 70, illustrated in Figures 5, 6, and 7 and embodiment 72 shown in Figure 8 include housings 12, 48, 74, and 76 formed of a suitable rigid material such as metal, or the like, with the same being true for the balls 22, 52, and 80, 82.

Specific reference to Figures 5, 6, and 7, the housing 74 includes a cavity 86 including three spaced apart grooves for supporting springs 98, 100, 102, thus enabling the lateral positioning of the ball 80 within the cavity 86, as illustrated progressively in Figures 5, 6, and 7. Various spring and groove configurations may be utilized to control the connect and disconnect forces. As illustrated in Figure 5a, the grooves 90 and spring configuration enables passage of the ball 80 thereby along with the stem, whereas the groove 94 and spring configuration 102 shown in Figure 7a lock the ball 80 to prevent disconnect from the housing cavity 86.

The embodiment 72 shown in Figure 8 utilizes a cavity 110 having a spherical inside shape 114 and further includes two grooves 118, 120 with springs 122, 124 therein to provide greater retaining force on the ball 82 with the groove 118 and spring 122, then groove 120 and spring 122 being disposed on opposite or opposing hemispheres 128, 130 of the ball 82.

Although there has been hereinabove described a specific ball holding, latching, and locking applications using radial and axial springs in accordance with the present invention for the purpose of illustrating the manner in which the invention may be used to advantage, it should be appreciated that the invention is not limited thereto. That is, the present invention may suitably comprise, consist of, or consist essentially of the recited elements. Further, the invention illustratively disclosed herein suitably may be practiced in the absence of any element which is not specifically disclosed herein. Accordingly, any and all modifications, variations or equivalent arrangements which may occur to those skilled in the art, should be considered to be within the scope of the present invention as defined in the appended claims.

## Claims

1. A latching mechanism (70, 72) comprising:
a housing (74, 76) having a cavity (86, 110) therein with an opening thereto;
a ball (80, 82) having a stem (106) of smaller diameter than said ball (80, 82) and extending therefrom, said ball (80, 82) being sized for insertion into the housing cavity (86, 110) and disconnection from the housing cavity (86, 110) through said opening;
at least one groove (94, 120) in the housing cavity (86, 110) proximate the cavity opening;
a coil spring (102, 124) disposed in the groove (94, 120) and enabling ball rotation within said cavity (86, 110) with said stem at selected conical angles with respect to a housing centerline,
**characterized in that**
a plurality of spaced apart circumferential grooves (90, 92, 94, 118, 120) are disposed in the housing cavity (86, 110) with a continuous garter coil spring (98, 100, 102, 122, 124) disposed in each groove (90, 92, 94, 118, 120) enabling positioning of said ball (80, 82) at different lateral positions within said housing (74, 76), whereby said coil springs (98, 100, 102, 122, 124) having a contact angle with the ball (80, 82) determined by a groove configuration and control ball insertion and ball disconnect forces.

2. The mechanism according to claim 1 **characterized in that** a portion of said cavity is spherical.

## Patentansprüche

1. Verriegelungsmechanismus (70, 72), umfassend:
ein Gehäuse (74, 76), das eine Kavität (86, 110) mit einer darin befindlichen Öffnung aufweist;
eine Kugel (80, 82) mit einem Schaft (106) von geringerem Durchmesser als die Kugel (80, 82), welcher sich davon weg erstreckt, wobei die Kugel (80, 82) zum Einführen in die Gehäusekavität (86, 100) und zum Lösen von der Gehäusekavität (86, 110) durch die Öffnung bemessen ist;
zumindest eine Nut (94, 120) in der Gehäusekavität (86, 110) in der Nähe der Kavitätsöffnung;
eine in der Nut (94, 120) angeordnete Schraubenfeder (102, 124), welche eine Rotation der Kugel innerhalb der Kavität (86, 110) mit dem Schaft unter ausgewählten konischen Winkelstellungen zur Gehäusemittellinie ermöglicht,
**dadurch gekennzeichnet, dass**
eine Vielzahl voneinander beabstandeter Umfangsnuten (90, 92, 94, 118, 120) in der Gehäusekavität (86, 110) angeordnet sind, wobei eine durchgehende ringförmige Schraubenfeder (98, 100, 102, 122, 124) in jeder Nut (90, 92, 94, 118, 120) angeordnet ist, die eine Positionierung der Kugel (80, 82) an verschiedenen lateralen Positionen innerhalb des Gehäuses (74, 76) ermöglicht, wobei die Schraubenfedern (98, 100, 102, 122, 124) einen Kontaktwinkel mit der Kugel (80, 82) aufweisen, welcher durch eine Nutkonfiguration bestimmt wird und die Kräfte zur Einfuhr sowie zum Lösen der Kugel regeln.

2. Mechanismus nach Anspruch 1, **dadurch gekennzeichnet, dass** ein Abschnitt der Kavität kugelförmig ist.

## Revendications

1. Mécanisme de verrouillage (70, 72) comportant :
un logement (74, 76) ayant une cavité (86, 110) avec une ouverture ;
une bille (80, 82) ayant une tige (106) d'un plus petit diamètre que ladite bille (80, 82) et s'étendant depuis celle-ci, ladite bille (80, 82) étant dimensionnée pour l'insertion dans la cavité de logement (86, 110) et une déconnexion de la cavité de logement (86, 110) à travers ladite ouverture ;
au moins une rainure (94, 120) dans la cavité de logement (86, 110) à proximité de l'ouverture de cavité ;
un ressort hélicoïdal (102, 124) disposé la rainure (94, 120) et permettant une rotation de bille à l'intérieur de ladite cavité (86, 110) avec ladite tige dans des angles coniques choisis par rapport à un axe du logement,
**caractérisé en ce que**
une multiplicité de rainures circonférentielles espacées (90, 92, 94, 118, 120) disposées dans la cavité de logement (86, 110) avec un ressort hélicoïdal périphérique continu (98, 100, 102, 122, 124) disposé dans chaque rainure (90, 92, 94, 118, 120) en permettant le positionnement de ladite bille (80, 82) dans différentes positions latérales dans ledit logement (74, 76), de sorte que lesdits ressorts hélicoïdaux (98, 100, 102, 122, 124) ont un angle de contact avec la bille (80, 82) déterminée par une configuration de rainure et commandent des forces d'insertion de bille et de déconnexion de bille.

2. Mécanisme selon la revendication 1, **caractérisé en ce qu'**une partie de ladite cavité est sphérique.
